# EUROPEAN PATENT APPLICATION

(11) **EP 1 707 052 A2**
(43) Date of publication of application: **04.10.2006**
(21) Application number: 05111978.2
(22) Date of filing: 12.12.2005
(51) Int. Cl.: A21C 1/02, A21C 1/14, B01F 7/16, B01F 7/18, B01F 9/12, B01F 15/02

(54) **Kneading machine for food dough**

(30) Priority: 29.03.2005 IT TO20050199
(71) Applicant: SANCASSIANO S.p.A., I-12060 Roddi d'Alba (Cuneo) (IT)
(72) Inventor: DROCCO, Davide, 12051, Alba (Cuneo) (IT)
(74) Representative: Notaro, Giancarlo

(57) **Abstract**

A kneading machine comprises a substantially cylindrical tank (40), and at least one kneading implement (26), which can turn within the tank (40), about an axis substantially parallel to the axis of the tank so as to define a theoretical cylinder. The kneading implement comprises at least two or more arms all extending substantially on the periphery of the respective theoretical cylinder so that said arms perform an orbital movement about the axis of rotation of the implement. Each arm, at least for a part of its length, is substantially rectilinear and set in a direction substantially parallel or slightly inclined with respect to a generatrix of the respective theoretical cylinder. The arms of the kneading implement are set at unequal angular distances apart about the axis of rotation of the implement in such a way as to be relatively grouped together in one or more angular ranges of the surface of said theoretical cylinder. The implement preferably co-operates with a similar implement or with a fixed contrast member.

## Description

The present invention relates to the kneading machines of the type indicated in the preamble of Claim 1.

A machine of the type referred to above is described in European patent application EP 1 342 501 A2 in the name of the present applicant.

The purpose of the present invention is to improve the previously proposed machine.

With a view to achieving this purpose, the subject of the present invention is a machine having the features specified in Claim 1. Further preferred and advantageous features of the invention are specified in the dependent claims.

The invention will now be described in detail with reference to the annexed drawings, which are provided purely by way of non-limiting example and in which:
- Figures 1-11 are identical to the figures of prior document No. EP 1 342 501 A2 and illustrate the machine according to the known art; and
- Figures 12-21 show some variant embodiments of the present invention.

### DESCRIPTION OF THE ART KNOWN FROM EP 1 342 501 A2

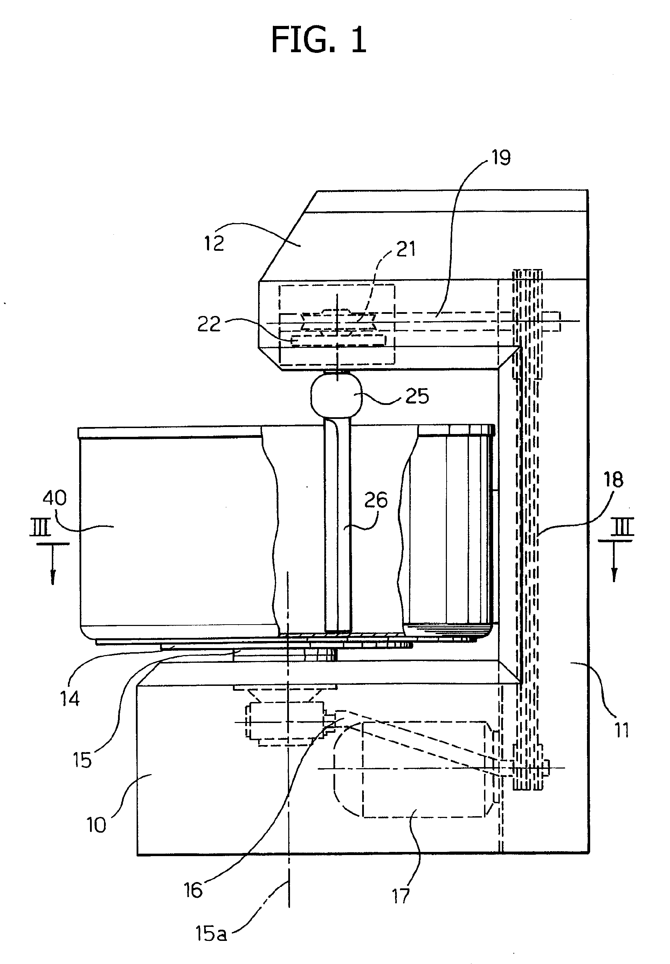

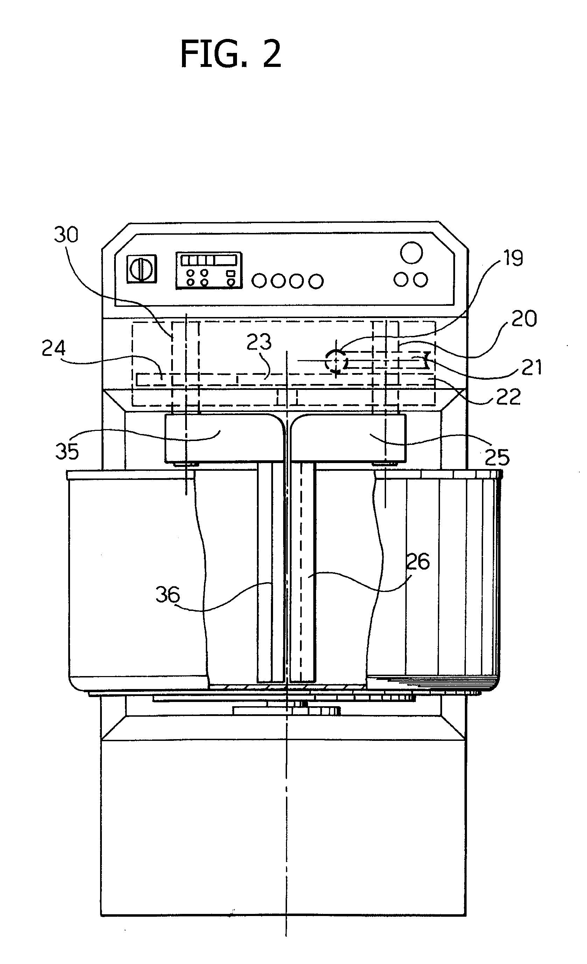

The machine illustrated in Figures 1-4 comprises a base 10 and a column 11, from which there projects in cantilever fashion a head 12 set on top of the base. Mounted on the base is a support 14 carried by a rotating shaft 15 having the axis 15a. The shaft 15 is controlled in rotation by a transmission 16 actuated by a motor 17. The transmission of the motion is indicated schematically, it being in itself elementary and able to assume a plurality of equivalent forms.

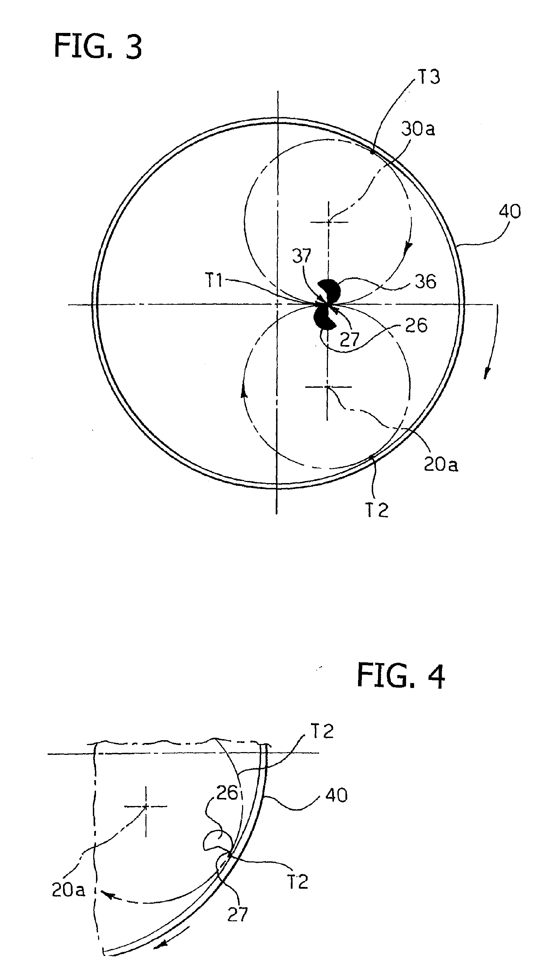

The same motor 17 drives a belt transmission 18 for rotation of the shaft 19 supported in the head 12, which with an orthogonal driving gear 21 drives a vertical shaft 20. Mounted on the vertical shaft 20 is a gear 22, which, through an idler gear 23, controls rotation of a gear 24 fitted on a shaft 30. Fixed on the shafts 20 and 30, which rotate in a concordant way, supported in the head 12, are horizontal arms 25 and 35, which, in turn, are prolonged in vertical arms 26 and 36. The arms 26 and 36 are received by the cylindrical tank 40, which is removably fixed to the plate support 14 and has its central axis coinciding with the axis 15a of the shaft 15. The action of the kneading arms 26 and 36 is discussed in greater depth with reference to the diagram of Figures 3 and 4. As shown in Figure 3, the axes 20a and 30a of the shafts 20 and 30 lie on a chord of the circumference representing the cross section of the tank 40. The length of the radial arms 25 and 35 is such that the kneading arms 26 and 36 describe respective theoretical cylinders substantially tangential to one another in an area T1. Furthermore, the position of the shafts 20 and 30 is chosen in such a way that the theoretical cylinders described by the arms 26 and 36 are substantially tangential to the wall of the tank 40, in areas designated, respectively, by T2 and T3.

For an effective operativeness of the machine, the ratios of transmission between the motor 17 and each of the shafts 15 and 20-30 are chosen so that the tangential speed of the arms 26 and 36 is higher than the tangential speed of the side wall of the tank 40.

As more clearly shown in Figure 4, the arms 26 and 36 preferably have a polygonal cross section, which has a sharp edge, forming a cutting edge, in an area corresponding to that of the arm facing in the direction of feed and towards the outside of the circular path described by the arm. In the example of embodiment described, said cutting edge is designated, respectively, by 27 and 37 in the two arms 26 and 36.

Operation of the machine described is clearly deducible from the foregoing description of the structure. The actuation of the motor 17 sets in rotation both the tank 40 and the arms 26 and 36. An even slow rotation of the tank, for example between 5 and 10 r.p.m., enables the entire mass of dough introduced therein to be involved in the action of the kneading arms 26 and 36. The kneading arms rotate at a higher speed (for example, 30-50 r.p.m.) and perform a generic action of kneading of the mass of the dough, exerting thereon an energetic action of cutting resulting from the fact that the rotation of the two arms 26 and 36 is synchronized so that said arms pass substantially and simultaneously into the area of tangency of the respective theoretical cylinders. The effect of cutting or shearing is altogether obvious in the point T1: each of the arms 26 and 36 works on the dough in the sense of drawing it in a direction opposite to that of the other arm, so that in the neighbourhood of the area T1 a substantially shearing action is exerted, in particular on account of the presence of the cutting edges. After the encounter of the arms and the cutting of the dough, the arms, in their rotation, move away from one another, causing an opening of the mass so that it is intensively in contact with the air and hence oxygenated and not heated.

In the areas around T2 and T3, each arm approaches the wall of the tank with a tangential speed of translation higher than the speed of the wall, so that the arm is pushed to penetrate energetically in the mass withheld by the wall of the tank 40.

The fact that the path of the arms 26 and 36 is such that the arms arrive in strict proximity with the wall means that an action of cleaning of the wall is obtained, so that material that is not subjected to an action of mixing and kneading does not remain in the tank areas where it can stagnate or remain adherent. For this reason, it is preferable that the length of the arms should be such that their free end arrives in strict proximity with the bottom of the tank.

The shape of the cross section of the kneading arms can be varied, said kneading arms preferably having a cutting edge that favours penetration in the mass, with the action of cutting.

By no means critical is the ratio between the diameter of the path of the kneading arms and the diameter of the tank, which depends upon the distance between the chord on which the axes of rotation of the two kneading implements lie and the centre of the tank. If said distance is smaller than the radius of the theoretical cylinders described by the two arms, as in the embodiment illustrated, it is possible to obtain a satisfactory combination between the action of cutting and the action of mixing. In general, a configuration of the machine and of the mechanisms of transmission of the motion may be chosen with ample freedom, with respect to the essential characteristics that form the subject of the ensuing claims.

Of course, in addition, the general configuration of the machine may even be altogether different from the one described above purely by way of example. It is possible to envisage, for example, that the column 11 is of a telescopic type, for the purpose of enabling a raising of the head that surmounts the tank for extracting the arms 26, 36 from the tank and enabling convenient removal of the tank itself for emptying it of its contents.

Furthermore, it is in theory possible to envisage a further variant, which will be described in detail in what follows, in which the machine is equipped with a single kneading implement of the type described above, which co-operates with a fixed contrast member that projects downwards from the head of the machine within the rotating tank. Said contrast member could be constituted by an arm set fixed in a position corresponding to the area of tangency between the theoretical cylinder of the single kneading implement and the diametral plane of the tank tangential thereto. In this case, the effect of cutting or shearing would occur following upon the action of the single rotating arm in co-operation with a fixed contrast member.

Yet a further possible variant could consist in envisaging more than two kneading implements cooperating with one another. In this case, it is possible to envisage also that the tank is not rotary in so far as the feed and change of the dough within the tank are obtained by means of the kneading implements themselves, which are mutually tangential to one another two by two.

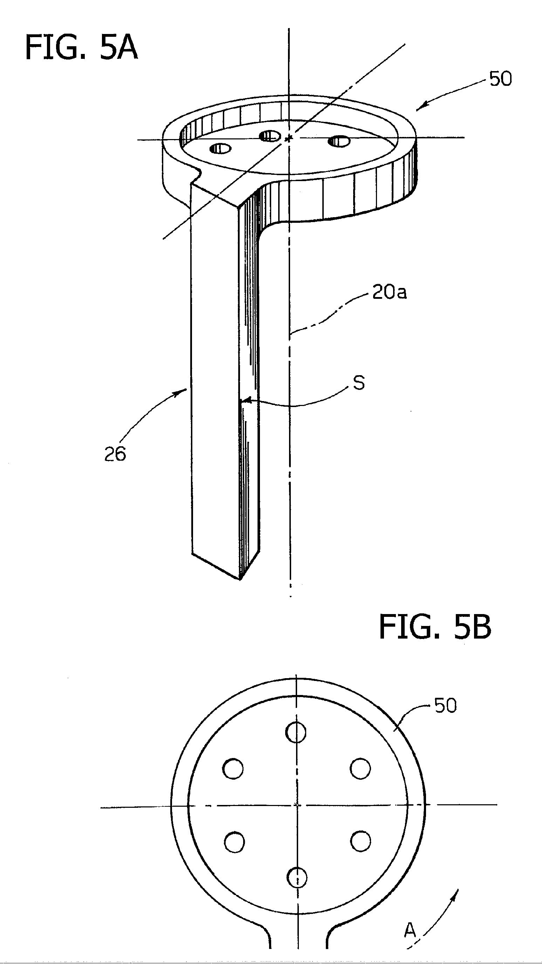

Figure 5A is a perspective view of a further embodiment of one of the two kneading implements of the machine of Figures 1- 4. The kneading implement designated by the reference number 26, illustrated in Figure 5A, as well as in the plan view of Figure 5B, preferably has the cross section having the shape of a right-angle trapezium (see Figure 5B) so as to define a front sharp edge, with reference to the direction of rotation (indicated by the arrow A in Figure 5B), which is a cutting edge S designed to cause a stretching and subsequently a clean cutting of the dough whenever it crosses over the other kneading implement 36 of the machine (which may of course present an identical conformation). In the embodiment illustrated in Figures 5A, 5B, the kneading implement 26 is constituted by a rectilinear arm, parallel to any generatrix of the theoretical cylinder described thereby in its rotation about the axis 20a. The figures illustrate a constructional solution in which the arm constituting the implement 26 extends from a top disk 50, which has the purpose of providing coupling to the respective drive shaft.

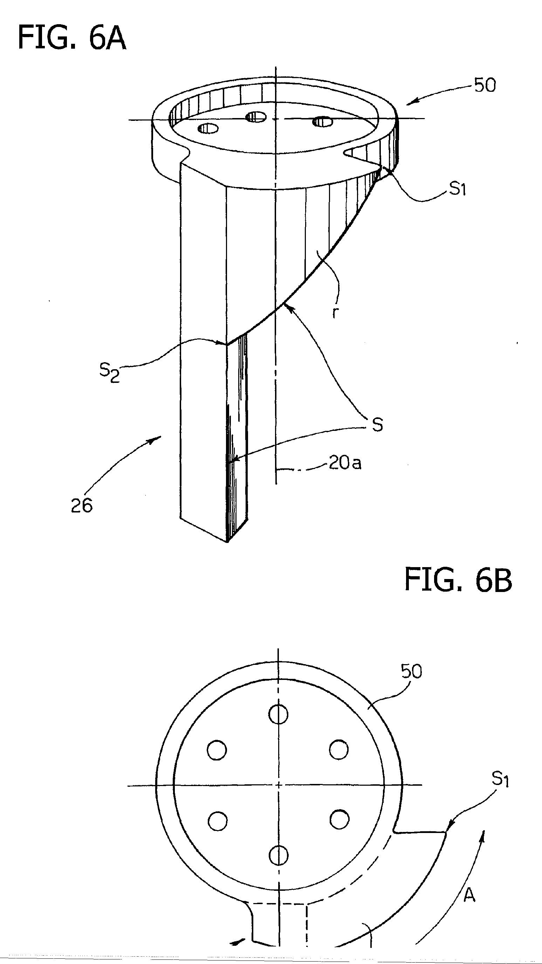

Figures 6A, 6B illustrate a variant of the kneading implement of Figures 5A, 5B, in which the arm 26 extends from the coupling disk 50 with a portion of root r of a substantially triangular shape, having a width progressively decreasing downwards starting from the coupling disk 50. The portion r has an edge, the end points of which are designated in Figure 6A by S₁, S₂, which lies on the surface of the theoretical cylinder described by the arm 26 and which is markedly inclined with respect to a generatrix of said theoretical cylinder. Consequently, the cutting edge S of the kneading implement has a development greater than that of the version illustrated in Figures 5A, 5B. The purpose of the portion r is above all to increase the effect of shearing thanks to the greater length of the cutting edge S. The portion of the cutting edge S corresponding to the stretch that goes from S₁ to S₂ is set on the same theoretical cylinder on which the bottom stretch of the cutting edge S of the arm 26 is set. A further advantage of the portion r is that, as a result of the oblique position of its sharp edge, in the action of cutting it pushes the cut dough downwards, preventing this from twisting with a skein effect and climbing up the kneading implement. A last advantage of the portion r is to stiffen the arm 26 mechanically, increasing its cross section considerably in the area of connection to the disk 50.

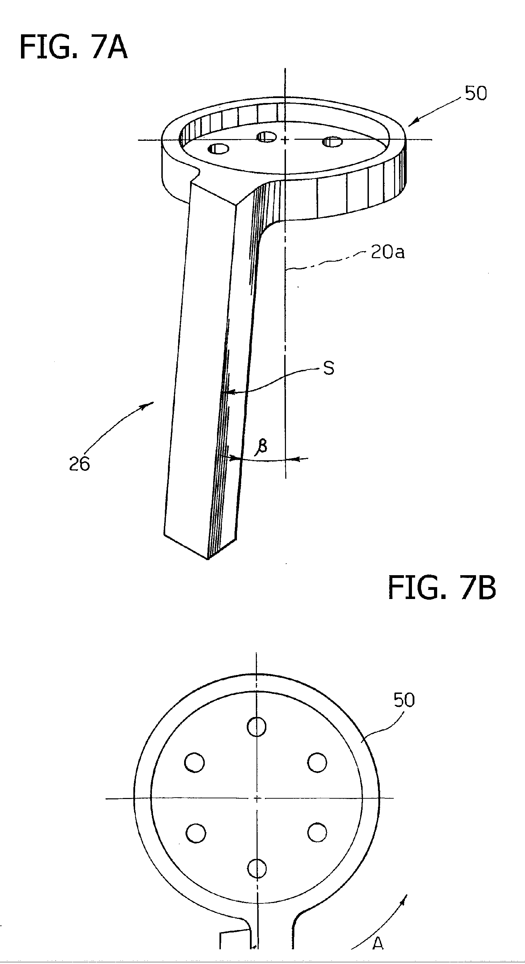

Figures 7A and 7B illustrate a further variant of the solution of Figures 5A and 5B, in which the arm 26 is always rectilinear, but set in a direction slightly inclined with respect to a generatrix of the theoretical cylinder described by the kneading implement in its rotation.

Studies and experiments conducted by the present applicant have shown that the angle β formed between the arm 26 of the solution of Figures 7A and 7B and any generatrix of the respective theoretical cylinder can be comprised between 0° and 10°. The solution illustrated regards specifically a case where the angle β is equal to 4.5°, a value that has proven particularly advantageous. There are, however, possible other values in the range of values indicated above. Angles considerably larger than 10° are not advisable in so far as the arm 26 is rectilinear so that its opposite ends rotate on different orbits with respect to the axis of rotation of the implement. Consequently, in when the two implements cross over one another, the distance between the cutting edges S is not constant along the length of the arms, a fact which sets a limit to the possibility of inclining each arm, albeit preserving the effect of cutting during the action of kneading. The expression "slightly inclined", wherever used in the present description and in the ensuing claims, must therefore be understood as indicating an angle not sensibly larger than 10°.

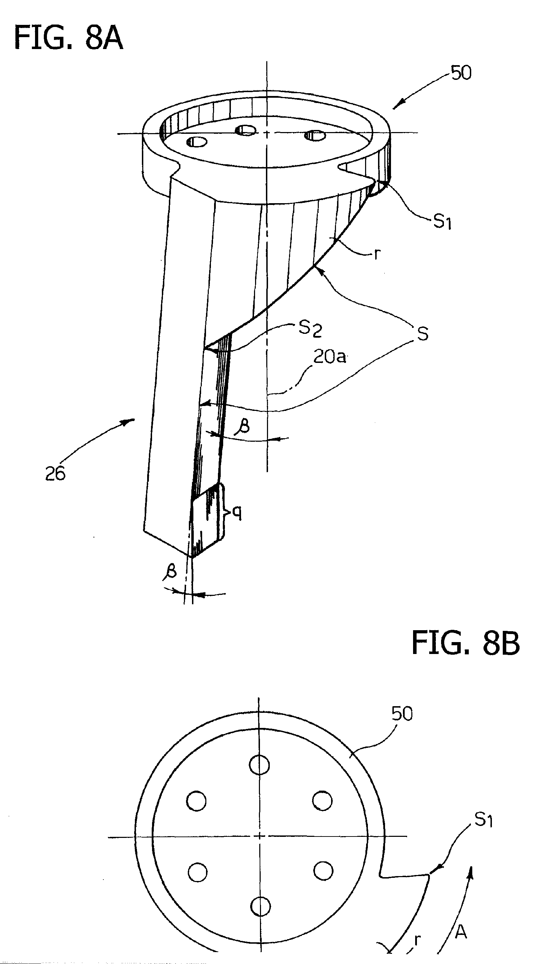

Figures 8A and 8B illustrate a further variant that is a combination of the solutions of Figures 6A, 6B and 7A, 7B in so far as it has an arm 26 inclined by an angle β with respect to a generatrix of the respective theoretical cylinder, as in the case of the solution of Figures 7A, 7B, and is moreover provided with a portion of root r, as in the case of the solution of Figures 6A and 6B. The parts in common with said figures are designated by the same reference numbers. Furthermore, in the case of the solution of Figures 8A and 8B, the arm 26 has a bottom end portion q that has its front face (once again with reference to the direction of rotation of the arm), which is parallel to any generatrix of the theoretical cylinder of the implement. Said characteristic is evident in Figure 8A, where it is indicated that the front face of said terminal portion forms also an angle β with respect to the corresponding face of the top part of the arm, the angle β being the angle of inclination of the arm 26 with respect to the generatrix of the theoretical cylinder. Thanks to said characteristic, the terminal part q does not compress the dough on the bottom of the tank and increases the effect of drawing of the dough during kneading. There is a reduced tendency for the dough to slip away from the implements, which can thus exert a greater action of lengthening and stretching on the dough itself.

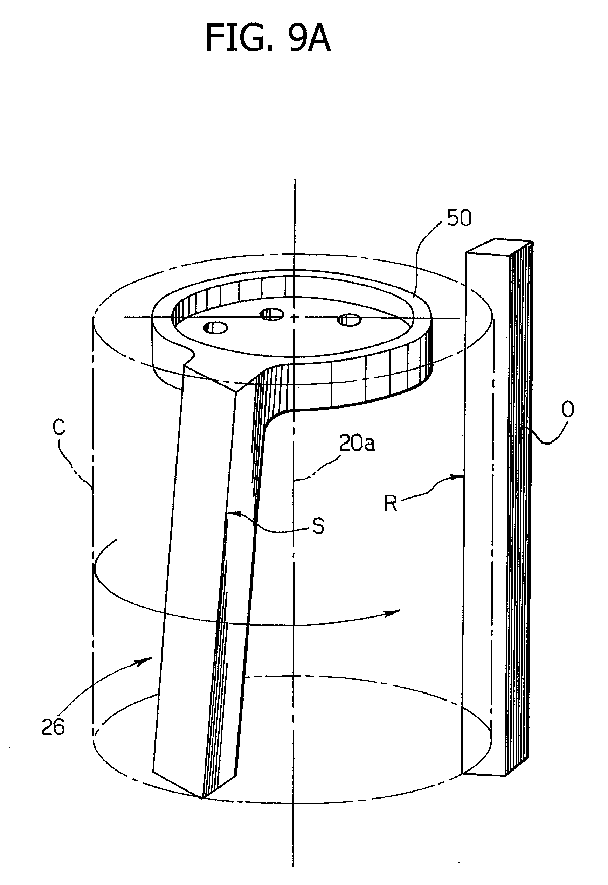

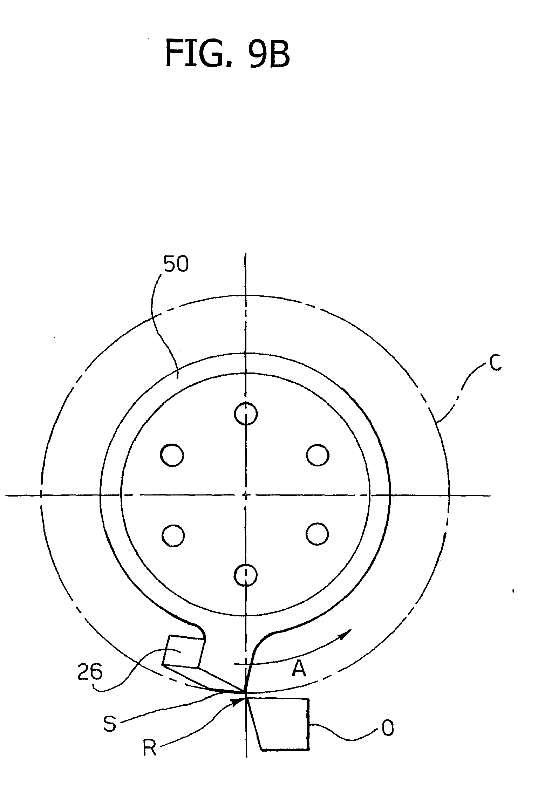

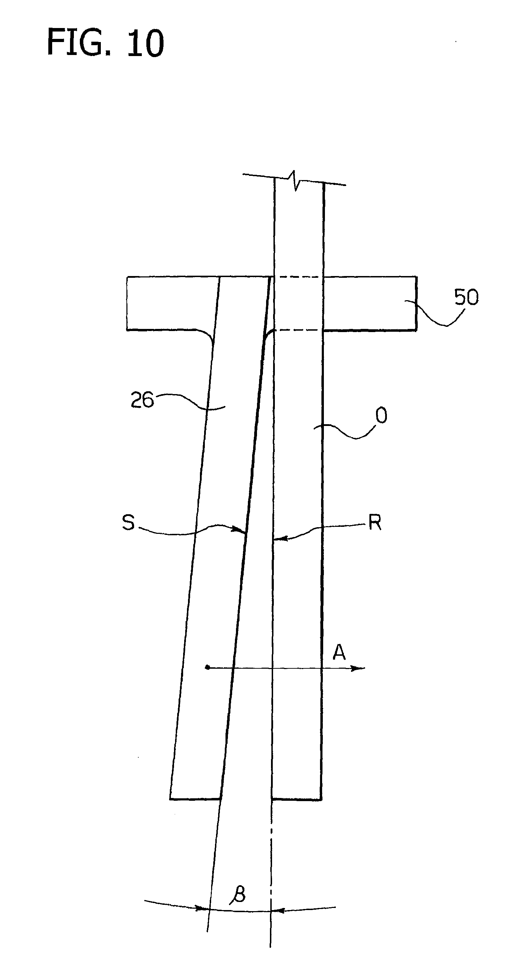

Figures 9A, 9B, 10 and 11 refer to a further embodiment that envisages a single kneading implement 26, shaped according to any one of the variants envisaged in the embodiment previously described for both of the kneading implements. In the case illustrated in Figures 9A, 9B, 10, 11, the kneading implement 26 is of the type illustrated in Figures 7A and 7B. However, as has already been said, it could also have any of the configurations of Figures 5, 6 and 8, or yet again a further alternative configuration. In the case of said second embodiment, the single kneading implement 26 co-operates with a fixed contrast member O, which is supported in a fixed position within the tank by the head 12 of the machine, which surmounts the tank. As may be seen in the drawings, in the example illustrated the fixed contrast member O is in the form of a substantially rectilinear bar directed parallel to any generatrix of the theoretical cylinder C defined by the kneading arm 26 in its rotation about the axis 20a. The contrast member O is moreover set substantially tangential to said theoretical cylinder and has preferably a transverse cross section of a trapezial shape (Figure 9B) substantially corresponding to that of the kneading arm 26, defining a cutting edge R that co-operates with the cutting edge S of the arm 26 whenever the arm crosses over the contrast member O for the purpose of obtaining the desired shearing effect.

Of course, it is likewise possible to set the contrast member O according to a direction slightly inclined with respect to a generatrix of the theoretical cylinder defined by the implement 26, in a way similar to what has been described for the implement 26 with reference to Figures 7 and 8. Theoretically, the fixed member O could also have a cutting edge R with a development corresponding to that of the cutting edge S of the arm 26 of the solution of Figure 6.

Of course, a different choice of the angle that is to be formed between the arm 26 of the kneading implement and the fixed contrast member O determines a different effect of shearing between the cutting edges S, R.

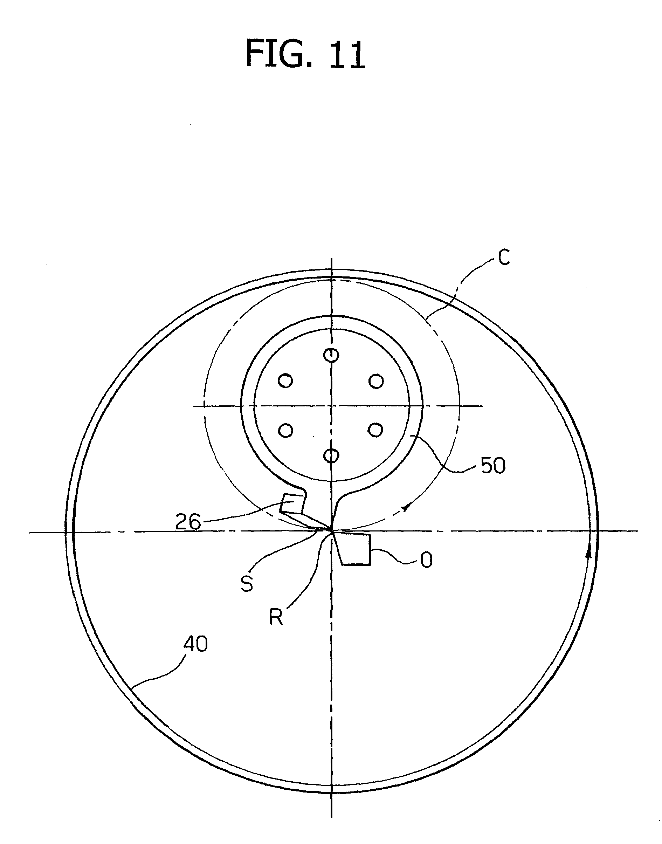

Figure 11 illustrates a plan view of the machine built according to said second embodiment, which shows that the cutting edge R of the fixed contrast member O comes to be in a position corresponding to the axis of the tank. It may likewise be seen that in said solution the theoretical cylinder C of the kneading implement has a diameter substantially corresponding to the internal radius of the tank.

Of course, there are in any case possible variants as regards the positioning of the fixed contrast member O and consequently the sizing of the theoretical cylinder C.

For example, even though all the embodiments described herein envisage a rotating tank, there is not ruled out the construction of a machine with a fixed tank, and/or a sizing of the kneading implements and/or a provision of a number greater than two kneading implements for the purpose of guaranteeing that all the product contained in the tank is adequately kneaded, even though the tank is not rotating.

### DESCRIPTION OF THE INVENTION

All the characteristics described above with reference to the known art can be adopted also in the case of the present invention, with the difference that the conformation of the kneading implement, in the case where there is only one, or of one or more kneading implements, in the case where there are at least two, is different.

According to the present invention, the implement comprises at least two arms that are set at unequal angular distances apart about the axis of rotation of the implement in such a way as to be relatively grouped together in one or more angular ranges of the surface of said theoretical cylinder.

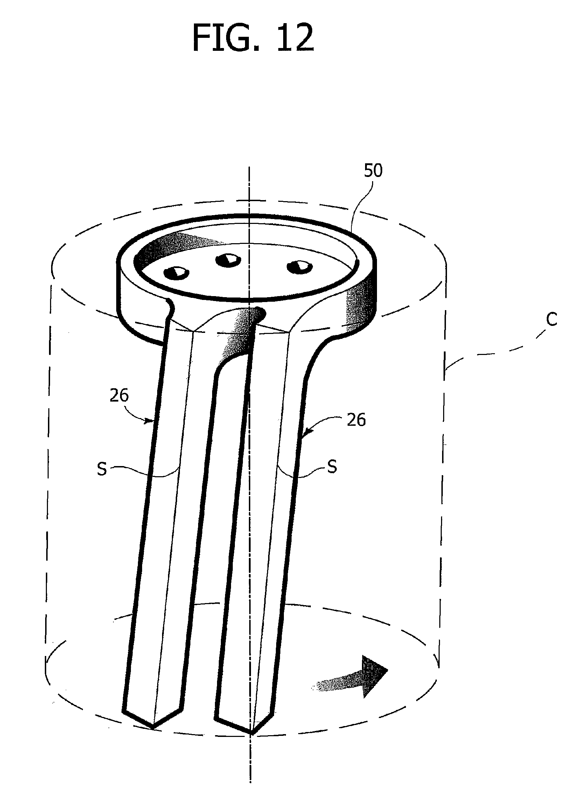

With reference in particular to Figure 12, a kneading implement according to the invention is illustrated, which can be used in a machine that otherwise may be identical to that of the known art described above. In the case of Figure 12, the implement comprises a top disk 50 altogether similar to that of Figure 7, from which there project downwards two arms 26, each of which is similar to the arm 26 of Figure 7, as regards both the general conformation and the inclination of the arm, as well as the cross section of the arm, with the cutting edge S. As may be seen, the two arms 26 are not set at equal angular distances apart, or else, are not diametrally opposite, but rather are grouped together in a relatively restricted angular range of the surface of the theoretical cylinder C, said angular range being preferably less than 180° and still more preferably less than 100°.

In the case of Figure 12, the two arms 26 are substantially equal and parallel and terminate each with a free end projecting within the tank.

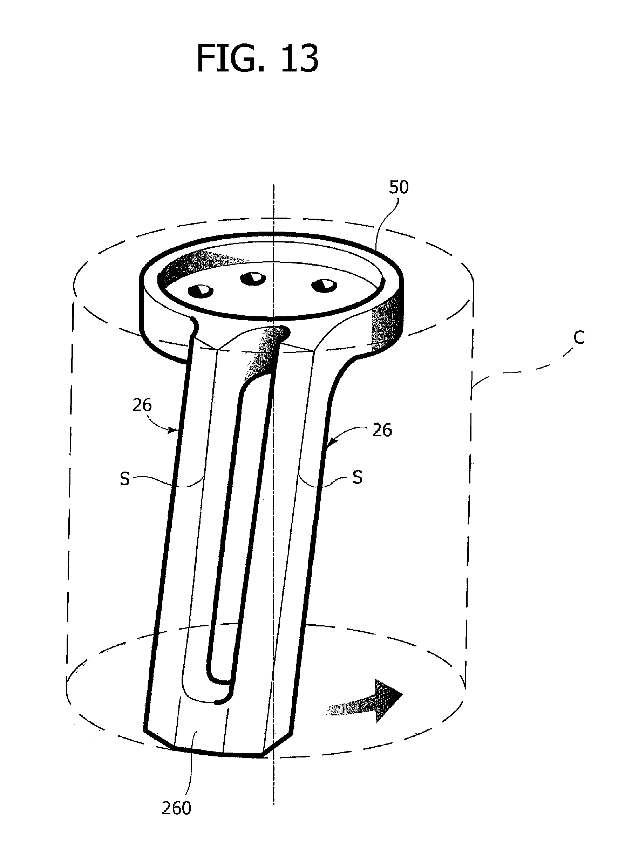

In the case of Figure 13, the two arms 26 are connected rigidly at their free ends via a radiusing portion 260.

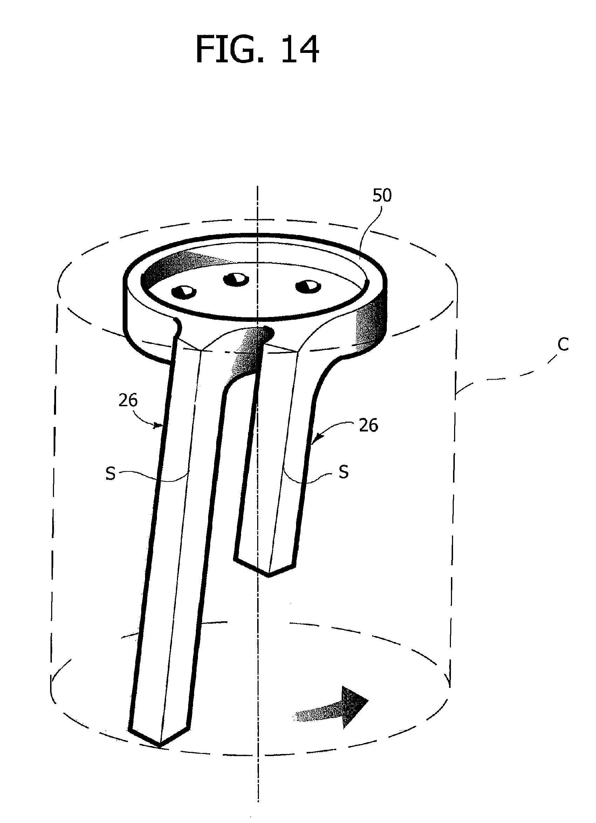

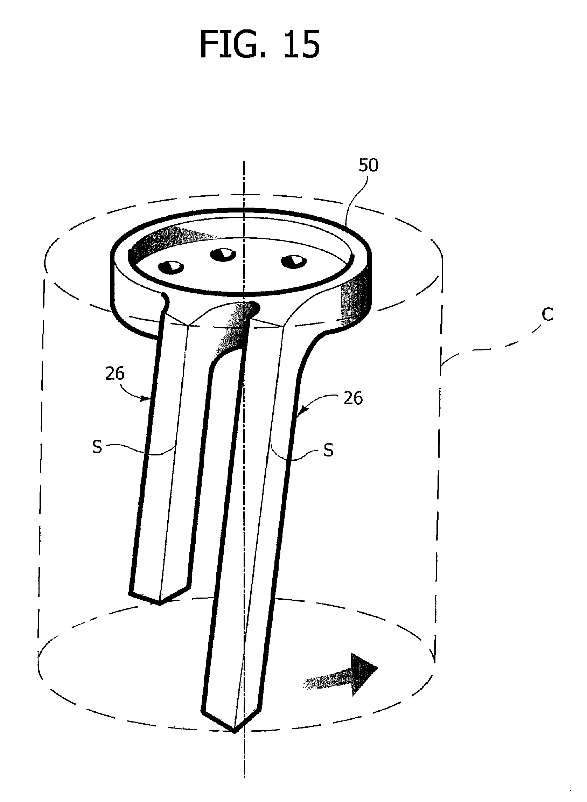

Figures 14 and 15 show two variants with arms of different length.

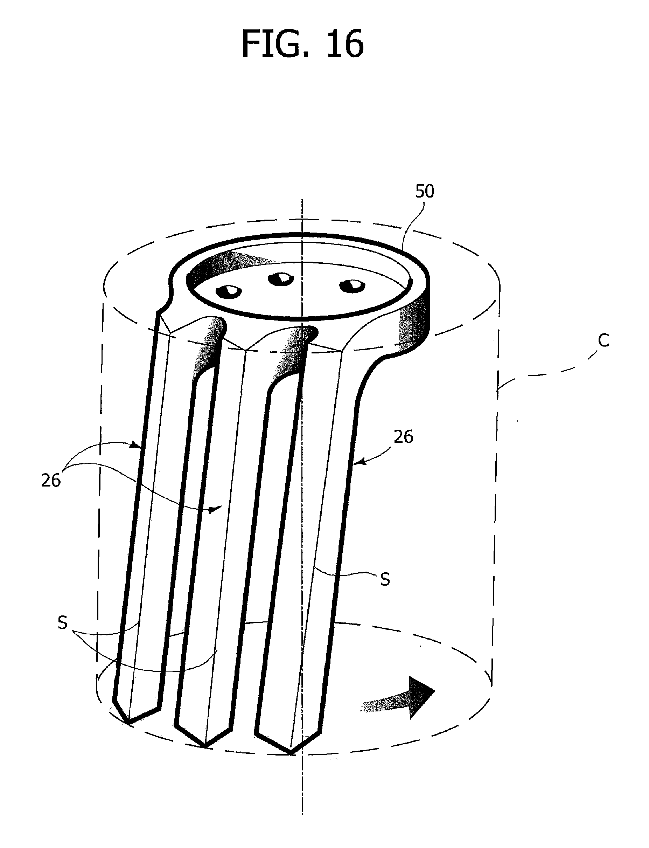

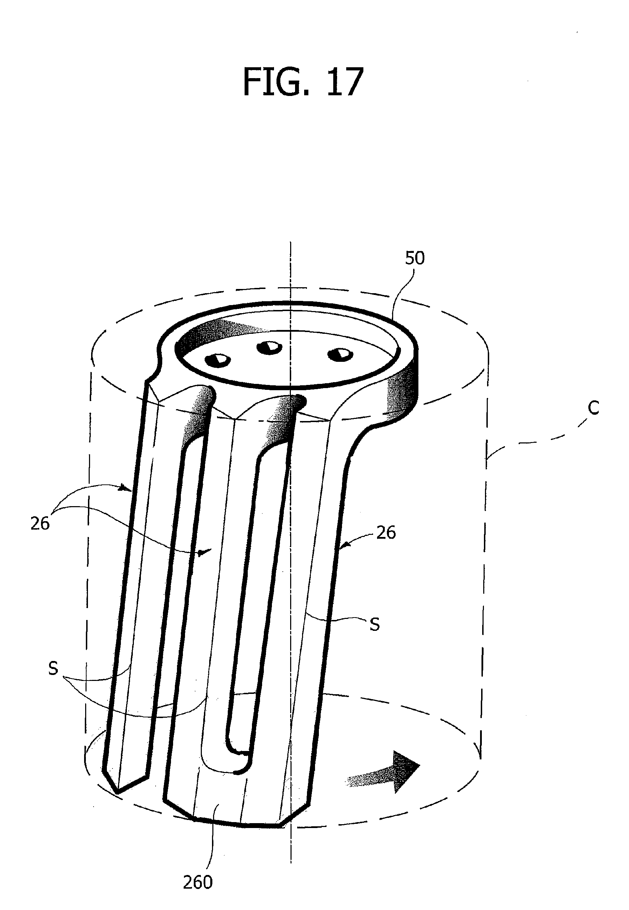

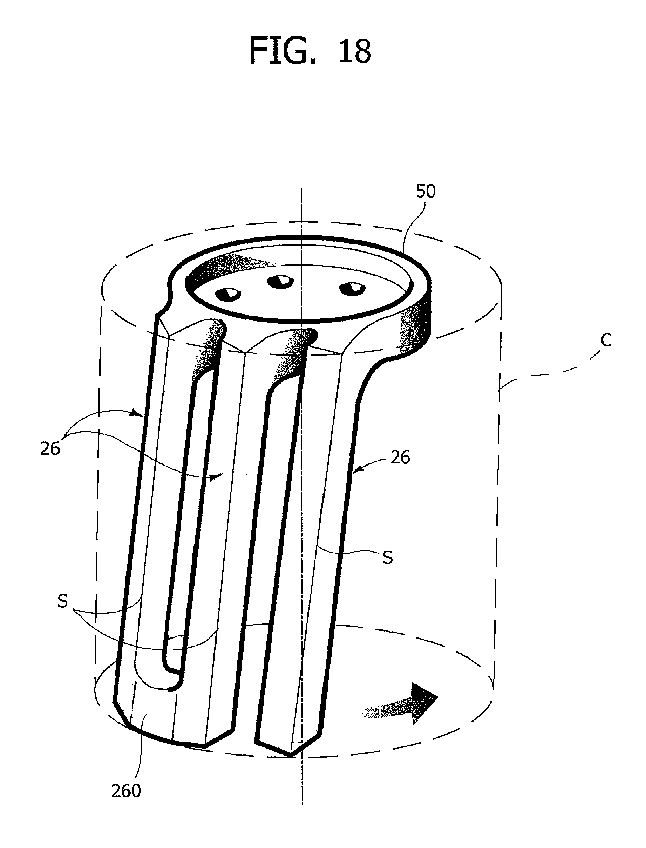

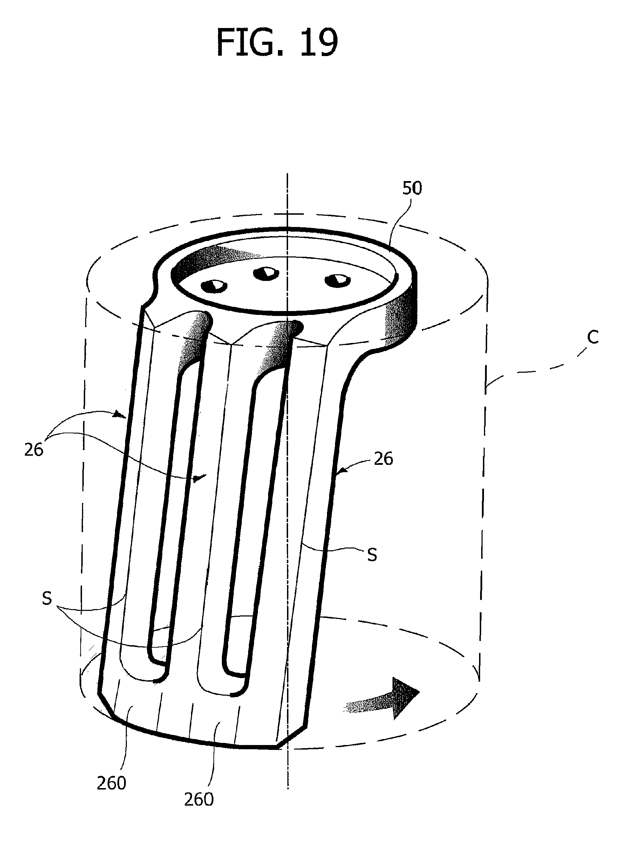

Figures 16, 17, 18, 19 show variants with three arms, with ends all free, or with the ends of two of the three arms connected together, or with all three ends connected to one another.

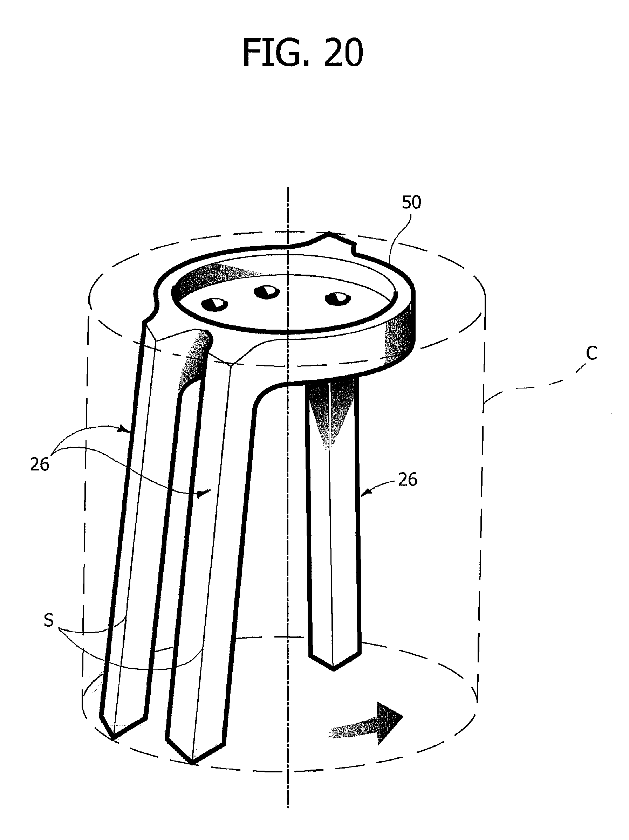

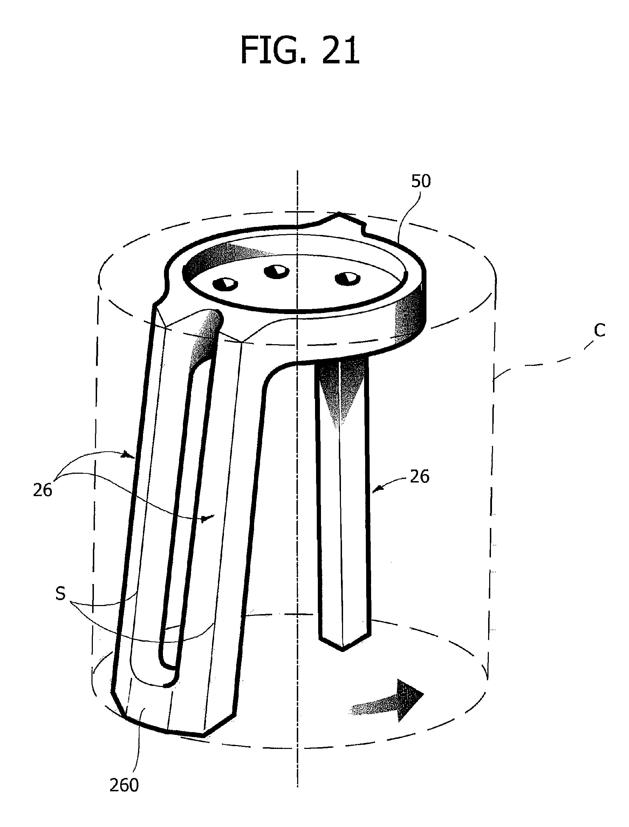

Finally, Figures 20 and 21 illustrate two variants with three arms 26, two of which are grouped together in a first angular area of the theoretical cylinder C, with their ends free (Figure 20) or connected together (Figure 21), the third arm being in a second angular area of the theoretical cylinder C, set at a distance from the first.

It would also be possible to envisage a higher number of arms, grouped together in a number of angular areas of the surface of the theoretical cylinder C.

The kneading implement according to the invention can be used as single element inside the tank, or else in association with a rotating implement, preferably a rotating implement of identical conformation, or in association with a fixed contrast member.

Of course, without prejudice to the principle of the invention, the details of construction and the embodiments may vary widely with respect to what is described purely by way of example herein, without thereby departing from the scope of the present invention.

## Claims

1. A kneading machine comprising:
- a substantially cylindrical tank (40); and
- at least one kneading implement (26), which can turn within the tank (40), about an axis substantially parallel to the axis of the tank so as to define a theoretical cylinder,
- in which the kneading implement comprises at least two or more arms all extending substantially on the periphery of the respective theoretical cylinder so that said arms perform an orbital movement about the axis of rotation of the implement; and
- in which each arm, at least for a part of its length, is substantially rectilinear and arranged in a direction substantially parallel or slightly inclined with respect to a generatrix of the respective theoretical cylinder,
said kneading machine being **characterized in that** said arms are arranged at unequal angular distances apart about the axis of rotation of the implement in such a way as to be relatively grouped together in one or more angular ranges of the surface of said theoretical cylinder.

2. The kneading machine according to Claim 1, **characterized in that** each arm extends from above downwards within the tank and terminates with a free end.

3. The kneading machine according to Claim 1, **characterized in that** at least two of said arms are rigidly connected together.

4. The kneading machine according to Claim 3, **characterized in that** at least two of said arms are rigidly connected together at their ends extending within the tank.

5. The kneading machine according to Claim 1, **characterized in that** it comprises a second kneading implement, which can also turn within the tank (40) about an axis substantially parallel to the axis of the tank so as to define a theoretical cylinder substantially tangential to the theoretical cylinder of the other kneading implement, said second implement also comprising two or more arms all extending substantially on the periphery of the respective theoretical cylinder so that said arms perform an orbital movement about the axis of rotation of the implement, in which each arm of the second implement, at least for a part of its length, is substantially rectilinear and set in a direction substantially parallel or slightly inclined with respect to a generatrix of the respective theoretical cylinder, and in which moreover also the arms of the second implement are set at unequal angular distances apart about the axis of rotation of the implement in such a way as to be relatively grouped together in one or more angular ranges of the surface of said theoretical cylinder.

6. The kneading machine according to Claim 5, **characterized in that** the theoretical cylinders of the two implements are both tangential to the side wall of the tank.

7. The kneading machine according to Claim 1, **characterized in that** there are provided means for controlling a rotation in the same direction of the two kneading implements (26, 36) about the respective axes of rotation designed to cause the arms of said implements to have orbital movements about the respective axes of rotation that are synchronized with one another so that arms of the two implements each time pass substantially simultaneously in the area of tangency (T1) of the respective theoretical cylinders, crossing over one another with opposite directions of movement, on account of the concordant rotation of the two implements.

8. The kneading machine according to Claim 7, **characterized in that** the two aforesaid theoretical cylinders have substantially equal diameters, substantially equal heights, and **in that** the speed of rotation of the arms are likewise substantially equal.

9. The kneading machine according to Claim 7, **characterized in that** each of the aforesaid theoretical cylinders has a sufficiently large diameter so that said theoretical cylinder has an encumbrance that exceeds the limits of a quadrant of tank defined between two orthogonal planes containing both of the axes of the tank.

10. The kneading machine according to Claim 7, **characterized in that** the two kneading implements constitute the only members present inside the tank.

11. The kneading machine according to Claim 7, **characterized in that** the arms of the two kneading implements (26, 36) have cutting edges that are opposed to one another when the arms of the two implements (26, 36) cross over one another.

12. The kneading machine according to Claim 1, **characterized in that** the tank (40) presents a rotary motion about its own axis and with a direction of rotation concordant with the direction of rotation of the implement.

13. The kneading machine according to Claim 12, **characterized in that** the peripheral speed of the wall is lower than the tangential speed of the arms of the kneading implement.

14. The kneading machine according to Claim 1, **characterized in that** each arm has a length such as to arrive with one of its ends at skimming the bottom of the tank.

15. The kneading machine according to Claim 7, **characterized in that** the rotations of the two kneading implements are synchronized so that their arms pass at different times through the area of tangency between the two respective theoretical cylinders so as to obtain a predetermined space between the arms when the latter are at the minimum distance apart from one another.

16. The kneading machine according to Claim 1, **characterized in that** each of said arms forms an angle of between 0° and 10° (extremes included) with respect to a generatrix of the theoretical cylinder of the kneading implement.

17. The kneading machine according to Claim 1, **characterized in that** it comprises a fixed contrast member (O) set within the tank in a position substantially tangential to the theoretical cylinder of the kneading implement.

18. The kneading machine according to Claim 17, **characterized in that** the contrast member (O), at least for a part of its length, is substantially rectilinear and set in a direction substantially parallel or slightly inclined with respect to a generatrix of the theoretical cylinder of the kneading implement.

19. The kneading machine according to Claim 17, **characterized in that** the kneading implement and the contrast member constitute the only members present within the tank.

20. The kneading machine according to Claim 17, **characterized in that** the arms of the kneading implement and the contrast member have respective cutting edges that are opposed to one another when the arms of the kneading implement each pass adjacent to the contrast member.

21. The kneading machine according to Claim 20, **characterized in that** the contrast member has a polygonal, preferably trapezial, cross section.
